# EUROPEAN PATENT APPLICATION

(11) **EP 2 659 779 A1**
(43) Date of publication of application: **06.11.2013**
(21) Application number: 11853111.0
(22) Date of filing: 30.12.2011
(51) Int. Cl.: A23B 4/20, A23L 1/325, A23L 3/3472

(54) **NATURAL COLOUR REACTIVATING AGENT FOR TUNA AND METHOD FOR THE PRODUCTION THEREOF**

(30) Priority: 31.12.2010 ES 201100045 P
(71) Applicant: Trivaris, S.L., 30710 Los Alcázares (Murcia) (ES)
(72) Inventor: SAMPER VILLAESCUSSA, Ángel, E-30710 Los Alcázares (Murcia) (ES)
(74) Representative: Jiminez Brinquis, Ruben
(86) International application number: PCT/ES2011/000384
(87) International publication number: WO 2012/089872

(57) **Abstract**

This invention refers to a re-activant of the colour of tuna formed by mixing various components and water, designed to recover the natural colour of packed tuna. It likewise includes the procedure by which the product is obtained, which is composed of a powder mixture to be mixed with water in a proportion of 4 Kg. of mixture for every 50 litres of water, using proportional measures to obtain different amounts, being characterised by the fact that the composition of the powder mixture includes a mixture of various plant extracts.

## Description

### PURPOSE OF THE INVENTION

As stated in the heading of this descriptive memorandum, the invention refers to a re-activant of the colour of tuna formed by mixing various components and water, designed to recover the natural colour of packed tuna. It likewise includes the procedure for obtaining that product.

More specifically, the purpose of the invention consists of a product obtained from a mixture of various plant extracts and water in very specific proportions, obtaining a product with a completely different composition to all those available on the market, and which applied under determinate conditions on frozen tuna loin gives it back its natural colour from the moment it is packed until it is sold to the public.

### FIELD OF APPLICATION OF THE INVENTION

The field of application of this invention falls within the processing, handling and packaging sector of products from capture fishery, more specifically within the products destined to treating the natural colour of the fish.

### BACKGROUND OF THE INVENTION

The quality of the tuna depends on multiple factors, although those relating to its capture and subsequent processing are the most important to ensure the quality of the tuna and those which determine that it comes to the consumer's table under the best conditions.

All the parameters that are going to be used for the qualification and distribution of the tuna to the different markets are analysed at the tuna processing establishments. The colour, freshness and fat are the three main aspects to be considered, without overlooking what the external silhouette represents, the thick flesh of the belly or the actual skin. All these parameters are signs of a good processing at the time of its capture which ensures a top quality fish.

The colour is one of the most important aspects when it comes to marketing the tuna, because due to the lactic acid on the body of the tuna which it undergoes at death, it changes colour from gelatine red to an earthen brown colour. Consequently, a bright red colour is a symptom of a high quality tuna, but very often, although the tuna has been extracted exhaustively and carefully and its processing has been of top quality, after being packed the natural colour of the tuna is not so intense and bright as when it reaches the processing plant. As a result, although the final packed product is top quality, this is not shown in its colour and appearance, and as a result of this it causes loss of value on the market.

The different processes which the tuna undergoes when reaching the processing and packing plants are as follows:
- Reception of whole tuna at the plants, where they are stored in cold chambers at -60° C.
- Cutting-up of whole tuna, to leave it prepared in loins.
- Defrosting of the loins once cut, in cold chambers of -5° C for 48 hours.
- Cleaning of the product once defrosted, removing the bone, blood, skin and shortage from the loin. Leaving it completely clean.

It is after this last process when the treatment of the tuna loin with different products takes place before being packed, to give it back its natural colour, provided it is vacuum-packed to avoid the presence of oxygen or any other gas which would make the red colour of the tuna lose its intensity and brightness.

There are various types of products that are used to treat the tuna loin to give it back its natural colour after being packed, one of which is carbon monoxide gas (CO) which helps revive the intense red colour of raw tuna, but is a highly toxic gas and its use is absolutely forbidden in the food industry within the European Economic Community. Another product that is used is BLUE-FIS N - 1/0280, which is composed of natural extracts (Garlic Powder), salt, natural spices, sugar and antioxidant (E-301), it has a yellowish-green powdery appearance and is used sprinkling it or mixing it with salt evenly on the fish. Lastly, there is another product which can be used combined with others, MERLUZIMA E, which is a yellowish white colour powder with a characteristic odour, composed of E 301 Sodium Ascorbate (antioxidant), E 331iii Tri-sodium 4 citrate (acidity corrector), 451i Pentasodium tri-phosphate (technological coadjuvant) and salt (used as support).

All these products maintain or preserve the colour of the tuna with artificial preservatives and colouring, yet with the product that is object of the invention, the tuna recovers its natural colour owing to the reaction of the plant extracts with the tuna, which eliminate the primary action of the tuna's lactic acid, recovering its natural colour.

Although there are products of this type which include in their composition some of the components contained in the proposed invention, none of them includes them all or use a similar procedure to obtain them, and it can therefore be said that there is no other known invention that presents similar characteristics to those presented in the invention that is now advocated.

### DESCRIPTION OF THE INVENTION

The product which the invention proposes to reactive the natural colour of tuna is composed of an exact mixture of the following ingredients: 4 Kg. of the product object of the invention for every 50 litres of tap water. A homogeneous mixture is obtained thanks to pouring that product, in powder state, into the tap water.

This product is a pale yellow colour and odourless, which is made up of plant extracts in powder state, and dextrose used as support and without any technological effect on the product. Its exact composition is as follows:
- Acerola extract: 17.5 %.
- Lettuce extract: 16.2 %.
- Collards extract: 15.8 %.
- Spinach extract: 14.5 %.
- Carrot extract: 14.5%.
- Grapefruit extract: 14.5%.
- Dextrose: 7%.

There is the possibility of adding an additive to the mixture like MELUZIMA E, which would improve the characteristics of the end product and improve the results obtained. It has been found that the exact amount of MERLUZIMA E to be mixed with the product that is object of the invention, and with tap water, to obtain optimum results is approximately 2 Kg.

For the product to react and reactivate the natural colour of tuna, the mixture with the exact amount of each component mentioned above is introduced in an injector and an injection in the tuna loin of an amount in weight of the mixture of approximately 5% of the weight of the loin to be processed is calculated. That is, for a 10 Kg. loin, some 500 cc. of mixture. Immediately after injecting the product, the tuna loin is vacuum-packed to eliminate the presence of oxygen or any other gas which would not allow the product to react correctly, obtaining less satisfactory results.

The reaction of the injected product would therefore be achieved 24 hours after vacuum-packing, thanks to the reaction of the plant extracts with it, which eliminate the primary action of lactic acid of the tuna, and the absence of any kind of gas in the packing process.

Having sufficiently described the nature of this invention, and the form of putting it into practice, it is not considered necessary to expound on its explanation for any expert on the matter to understand its scope and the advantages derived from this, observing that, within its essential features, it may be implemented in other forms of execution which differ in detail to the one that is given by way of example, and which would likewise reach the required protection provides its basic ingredients are not changed or modified.

## Claims

1. RE-ACTIVANT OF THE NATURAL COLOUR OF TUNA especially designed to preserve the natural colour of the tuna loin, composed of a powder mixture to be mixed with water at a proportion of 4 Kg. of mixture for every 50 litres of water, using proportional measures to obtain different amounts, **characterised by** the fact that the composition of the powder mixture includes the following elements and proportions:
- Acerola extract: 17.5 %.
- Lettuce extract: 16.2 %.
- Collards extract: 15.8 %.
- Spinach extract: 14.5 %.
- Carrot extract: 14.5%.
- Grapefruit extract: 14.5%.
- Dextrose: 7%.

2. RE-ACTIVANT OF THE NATURAL COLOUR OF TUNA, according to claim number 1 **characterised by** the fact that an additive is added to the mixture, like MERLUZIMA E, in an amount of approximately 2 Kg. for every 50 litres of mixture.

3. PROCEDURE TO OBTAIN THE NATURAL COLOUR RE-ACTIVANT OF TUNA, characterised because it includes the following steps:
1. Provision of the powder mixture in suitable proportions according to the final amount to be obtained (4 Kg for every 50 litres of water)
2. Mixture with tap water and stirred until dissolved.
3. Addition of the additive MERLUZIMA to the mixture in a proportion of 2 Kg. for every 50 litres of water.
4. PROCEDURE TO OBTAIN THE RE-ACTIVANT OF NATURAL COLOUR OF TUNA, in accordance with claim number 2, **characterised by** the fact that the mixture is introduced in an injector and an injection in the tuna loin of an amount in weight of the mixture of approximately 5% of the weight of the loin to be processed is calculated.
5. PROCEDURE TO OBTAIN THE RE-ACTIVANT OF NATURAL COLOUR OF TUNA, in accordance with claim number 3 and 4, **characterised by** the fact that immediately after injecting the product, the tuna loin is vacuum-packed.
